# EUROPEAN PATENT APPLICATION

(11) **EP 4 780 072 A1**
(43) Date of publication of application: **22.07.2026**
(21) Application number: 24884164.5
(22) Date of filing: 22.08.2024
(51) Int. Cl.: H04W 36/08

(54) **COMMUNICATION METHOD AND APPARATUS**

(30) Priority: 02.11.2023 CN 202311452706
(71) Applicant: HUAWEI TECHNOLOGIES CO., LTD., Shenzhen 518129 (CN)
(72) Inventor: FAN, Liangliang, Shenzhen, Guangdong 518129 (CN); XU, Haibo, Shenzhen, Guangdong 518129 (CN); YAO, Chuting, Shenzhen, Guangdong 518129 (CN)
(74) Representative: MERH-IP Matias Erny Reichl Hoffmann Patentanwälte PartG mbB
(86) International application number: PCT/CN2024/114019
(87) International publication number: WO 2025/092157

(57) **Abstract**

This application discloses a communication method and apparatus. The method includes: A terminal receives first indication information from a first cell corresponding to a first satellite, where the first indication information indicates the terminal to perform uplink synchronization with a second satellite without triggering a random access procedure; and after the terminal is within a coverage area of the second satellite, if a first SSB is the same as the second SSB, the terminal performs uplink synchronization with the second satellite without triggering the random access procedure, where the first SSB is used for communication between the terminal and the first satellite, and the second SSB is used for communication between the terminal and the second satellite. According to the method, after the terminal is within the coverage area of the second satellite, the terminal may perform uplink synchronization with the second satellite without triggering the random access procedure, so that efficiency of inter-satellite handover of the terminal can be improved.

## Description

### CROSS-REFERENCE TO RELATED APPLICATIONS

This application claims priority to Chinese Patent Application No. 202311452706.7, filed with the China National Intellectual Property Administration on November 2, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a non-terrestrial network (non-terrestrial network, NTN), as satellites move, a satellite that can provide a service for a terminal may change. For example, a satellite 1 provides a service for a terminal 1 to a terminal M, where M is a positive integer. With movement of the satellites, the terminal 1 to the terminal M change from being within a coverage area of the satellite 1 to being within a coverage area of a satellite 2, and therefore need to be handed over to the satellite 2, and the satellite 2 provides a service for the terminal 1 to the terminal M. In this way, within a short period of time, a large quantity of terminals may need to be handed over from one satellite to another satellite. How to improve efficiency of inter-satellite handover of the terminal needs further research.

### SUMMARY

This application provides a communication method and apparatus, to improve efficiency of inter-satellite handover of a terminal.

According to a first aspect, an embodiment of this application provides a communication method. The method may be applied to a first apparatus. The first apparatus may be a terminal or a module (for example, a circuit, a chip, a chip system, or a processor) in the terminal, or may be a logical node, a logical module, or software that can implement all or some functions of the terminal. The following uses an example in which the first apparatus is the terminal for description. The method may include: The terminal receives first indication information from a first cell corresponding to a first satellite, where the first indication information indicates the terminal to perform uplink synchronization with a second satellite without triggering a random access procedure; and after the terminal is within a coverage area of the second satellite, if a first SSB is the same as a second SSB, the terminal may perform uplink synchronization with the second satellite without triggering the random access procedure, where the first SSB is used for communication between the terminal and the first satellite, and the second SSB is used for communication between the terminal and the second satellite.

According to the method, after the terminal is within the coverage area of the second satellite, the terminal may perform uplink synchronization with the second satellite without triggering the random access procedure, so that efficiency of inter-satellite handover of the terminal can be improved. In addition, in this method, only when the first SSB is the same as the second SSB, the terminal can perform uplink synchronization with the second satellite without triggering the random access procedure. In this way, the terminal can receive a message from the second satellite by using a beam corresponding to the second SSB, and is successfully handed over to the second satellite.

In a possible design, after the terminal is within the coverage area of the second satellite, if the first SSB is the same as the second SSB, and signal quality of the second SSB is greater than a first threshold, the terminal may perform uplink synchronization with the second satellite without triggering the random access procedure. In this design, after the terminal is within the coverage area of the second satellite, the terminal may perform uplink synchronization with the second satellite without triggering the random access procedure, so that efficiency of inter-satellite handover of the terminal can be improved. In addition, in this design, only when the first SSB is the same as the second SSB, and the signal quality of the second SSB is greater than the first threshold, the terminal may perform uplink synchronization with the second satellite without triggering the random access procedure, so that the terminal can receive the message from the second satellite and is successfully handed over to the second satellite.

In a possible design, the method further includes: After the terminal is within the coverage area of the second satellite, if the first SSB is the same as the second SSB, and the signal quality of the second SSB is less than or equal to the first threshold, the terminal performs uplink synchronization with the second satellite through the random access procedure. According to this design, cases in which the terminal cannot receive the message from the second satellite when performing uplink synchronization with the second satellite without triggering the random access procedure can be avoided or reduced, so that the terminal can receive the message from the second satellite, and the terminal can be successfully handed over to the second satellite.

In a possible design, the method further includes: The terminal receives resource configuration information from the first cell or a second cell corresponding to the second satellite, where the resource configuration information is used for configuring an uplink resource; and after the terminal is within the coverage area of the second satellite, if the first SSB is the same as the second SSB, and the signal quality of the second SSB is less than or equal to the first threshold, the terminal may send a message to the second cell by using the uplink resource. In this design, when the first SSB is the same as the second SSB, and the signal quality of the second SSB is less than or equal to the first threshold, the terminal may send the message to the second cell by using the uplink resource configured by using the resource configuration information, so that a delay of sending the message to the second cell can be reduced.

In a possible design, the method further includes: After the terminal is within the coverage area of the second satellite, if the first SSB is different from the second SSB, the terminal performs uplink synchronization with the second satellite through the random access procedure. In this design, when the first SSB is different from the second SSB, the terminal may perform uplink synchronization with the second satellite by triggering the random access procedure, so that a case in which the terminal cannot receive the message from the second satellite when performing uplink synchronization with the second satellite without triggering the random access procedure can be avoided, and further, the terminal can receive the message from the second satellite and is successfully handed over to the second satellite.

In a possible design, the method further includes: The terminal receives resource configuration information from the first cell or a second cell corresponding to the second satellite, where the resource configuration information is used for configuring an uplink resource; and after the terminal is within the coverage area of the second satellite, if the first SSB is different from the second SSB, the terminal may send a message to the second cell by using the uplink resource. In this design, when the first SSB is different from the second SSB, the terminal may send the message to the second cell by using the uplink resource configured by using the resource configuration information, so that a delay of sending the message to the second cell can be reduced.

In a possible design, the method further includes: The terminal sends, to the second cell by using the uplink resource configured by using the resource configuration information, information indicating the second SSB. In this way, the terminal may notify the second cell of the second SSB, so that the second cell communicates with the terminal by using the second SSB.

Optionally, a cell identifier of the second cell corresponding to the second satellite is the same as or different from a cell identifier of the first cell.

According to a second aspect, an embodiment of this application provides a communication method. The method may be applied to a first apparatus. The first apparatus may be a terminal or a module (for example, a circuit, a chip, a chip system, or a processor) in the terminal, or may be a logical node, a logical module, or software that can implement all or some functions of the terminal. The following uses an example in which the first apparatus is the terminal for description. The method may include: The terminal determines a difference between a first propagation delay and a second propagation delay, where the first propagation delay is a propagation delay of a service link between the terminal and a first cell corresponding to a first satellite, the second propagation delay is a propagation delay of a service link between the terminal and a second cell corresponding to a second satellite, the first satellite is a satellite that provides a service for the terminal before the terminal is handed over, and the second satellite is a satellite that provides a service for the terminal after the terminal is handed over; and when the difference is greater than a second threshold, the terminal may send second indication information, where the second indication information indicates to reconfigure an uplink resource for the terminal.

According to the method, when the difference between the first propagation delay and the second propagation delay is greater than the second threshold, the terminal may send the second indication information, where the second indication information may indicate to reconfigure the uplink resource for the terminal. The first propagation delay is related to the terminal and the first satellite that provides a service for the terminal before the terminal is handed over, and the second propagation delay is related to the terminal and the second satellite that provides a service for the terminal after the terminal is handed over. In this way, in an inter-satellite handover scenario, an access network device may reconfigure the uplink resource for the terminal, to avoid or reduce data conflicts generated during inter-satellite handover of the terminal.

In a possible design, the second indication information includes the difference. In this way, the access network device may reconfigure the uplink resource for the terminal based on the difference, to avoid a data conflict generated during inter-satellite handover of the terminal.

In a possible design, the terminal may predict a difference between the first propagation delay and the second propagation delay at at least one of the following moments: a moment at which the first satellite stops providing a service for the terminal, a moment at which the second satellite starts to provide a service for the terminal, and a moment at which the terminal accesses the second satellite. According to this design, a computing amount of the terminal can be reduced, and power consumption of the terminal can be reduced.

According to a third aspect, an embodiment of this application provides a communication method. The method may be applied to a second apparatus. The second apparatus may be an access network device or a module (for example, a circuit, a chip, a chip system, or a processor) in the access network device, or may be a logical node, a logical module, or software that can implement all or some functions of the access network device. The following uses an example in which the second apparatus is the access network device for description. The method may include: The access network device receives second indication information sent by a terminal when a difference between a first propagation delay and a second propagation delay is greater than a second threshold, where the second indication information indicates to reconfigure an uplink resource for the terminal, the first propagation delay is a propagation delay of a service link between the terminal and a first cell corresponding to a first satellite, the second propagation delay is a propagation delay of a service link between the terminal and a second cell corresponding to a second satellite, the first satellite is a satellite that provides a service for the terminal before the terminal is handed over, and the second satellite is a satellite that provides a service for the terminal after the terminal is handed over; and the access network device may reconfigure the uplink resource for the terminal based on the second indication information.

In a possible design, the second indication information includes the difference.

In a possible design, the difference is a difference between the first propagation delay and the second propagation delay at at least one of the following moments: a moment at which the first satellite stops providing a service for the terminal, a moment at which the second satellite starts to provide a service for the terminal, and a moment at which the terminal accesses the second satellite.

According to a fourth aspect, this application provides a communication apparatus. The communication apparatus may be a terminal or a module (for example, a circuit, a chip, a chip system, or a processor) in the terminal, or may be a logical node, a logical module, or software that can implement all or some functions of the terminal. The communication apparatus has a function of implementing the first aspect or the second aspect. For example, the communication apparatus includes a corresponding module, unit, or means for performing the operations in the first aspect or the second aspect. The module, the unit, or the means may be implemented by software, may be implemented by hardware, or may be implemented by hardware executing corresponding software.

In a possible design, the communication apparatus includes a processing unit. Optionally, the communication apparatus further includes an interface unit. The interface unit may be configured to send and receive signals, to implement communication between the communication apparatus and another apparatus. The processing unit may be configured to perform some internal operations of the communication apparatus. Functions performed by the processing unit and the interface unit may correspond to the operations in the first aspect or the second aspect.

In a possible design, the communication apparatus includes a processor, and the processor may be configured to be coupled to a memory. The memory may store a computer program or instructions necessary for implementing the functions in the first aspect or the second aspect. The processor may execute the computer program or the instructions stored in the memory. When the computer program or the instructions are executed, the communication apparatus is caused to implement the method in any possible design of the first aspect or the second aspect.

In a possible design, the communication apparatus includes a processor and a memory. The memory may store a computer program or instructions necessary for implementing the functions in the first aspect or the second aspect. The processor may execute the computer program or the instructions stored in the memory. When the computer program or the instructions are executed, the communication apparatus is caused to implement the method in any possible design of the first aspect or the second aspect.

In a possible design, the communication apparatus includes a processor and an interface circuit. The processor is configured to communicate with another apparatus through the interface circuit, and perform the method in any possible design of the first aspect or the second aspect.

According to a fifth aspect, this application provides a communication apparatus. The communication apparatus may be an access network device or a module (for example, a circuit, a chip, a chip system, or a processor) in the access network device, or may be a logical node, a logical module, or software that can implement all or some functions of the access network device. The communication apparatus has a function of implementing the third aspect. For example, the communication apparatus includes a corresponding module, unit, or means for performing the operations in the third aspect. The module, the unit, or the means may be implemented by software, may be implemented by hardware, or may be implemented by hardware executing corresponding software.

In a possible design, the communication apparatus includes a processing unit. Optionally, the communication apparatus further includes an interface unit. The interface unit may be configured to send and receive signals, to implement communication between the communication apparatus and another apparatus. The processing unit may be configured to perform some internal operations of the communication apparatus. Functions performed by the processing unit and the interface unit may correspond to the operations in the third aspect.

In a possible design, the communication apparatus includes a processor, and the processor may be configured to be coupled to a memory. The memory may store a computer program or instructions necessary for implementing functions in the third aspect. The processor may execute the computer program or the instructions stored in the memory. When the computer program or the instructions are executed, the communication apparatus is caused to implement the method in any possible design of the third aspect.

In a possible design, the communication apparatus includes a processor and a memory. The memory may store a computer program or instructions necessary for implementing functions in the third aspect. The processor may execute the computer program or the instructions stored in the memory. When the computer program or the instructions are executed, the communication apparatus is caused to implement the method in any possible design of the third aspect.

In a possible design, the communication apparatus includes a processor and an interface circuit. The processor is configured to communicate with another apparatus through the interface circuit, and perform the method in any possible design of the third aspect.

It may be understood that in the fourth aspect or the fifth aspect, the processor may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a sixth aspect, this application provides a communication system.

In a possible design, the communication system may include the communication apparatus according to the fifth aspect and the communication apparatus according to the sixth aspect. The communication apparatus according to the fifth aspect is configured to perform the communication method according to the second aspect. For example, the communication system includes a terminal and an access network device. The terminal is configured to perform the communication method according to the second aspect, and the access network device is configured to perform the communication method according to the third aspect.

In another possible design, the communication system may include the communication apparatus and the access network device according to the fifth aspect. The communication apparatus according to the fifth aspect is configured to perform the communication method according to the first aspect. For example, the communication system includes a terminal and an access network device. The terminal is configured to perform the communication method according to the first aspect, and the access network device is configured to perform an operation performed by the first satellite or the second satellite in the communication method according to the first aspect.

According to a seventh aspect, this application provides a computer-readable storage medium. The computer storage medium stores a computer program or instructions, and when the computer program or the instructions are executed, the method in any one of possible designs of any one of the first aspect to the third aspect is implemented.

According to an eighth aspect, this application provides a computer program product. The computer program product includes computer program code, and when the computer program code is run, the method in any one of possible designs of any one of the first aspect to the third aspect is implemented.

According to a ninth aspect, this application provides a chip. The chip is configured to read a computer program stored in a memory, to perform the method in any possible design of any one of the first aspect to the third aspect.

For technical effects that can be achieved in any one of the third aspect to the ninth aspect, refer to descriptions of technical effects that can be achieved in any one of the possible designs in either the first aspect or the second aspect. Details are not described herein again.

### BRIEF DESCRIPTION OF DRAWINGS

FIG. 1A to FIG. 1E are diagrams of architectures of several communication systems according to this application;
FIG. 2A and FIG. 2B are diagrams of an application scenario according to this application;
FIG. 3 is a flowchart of a communication method according to this application;
FIG. 4 is a flowchart of another communication method according to this application;
FIG. 5 is a diagram of a structure of a communication apparatus according to this application; and
FIG. 6 is a diagram of a structure of another communication apparatus according to this application.

### DESCRIPTION OF EMBODIMENTS

The following describes the technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system (for example, a long term evolution (long term evolution, LTE) system), a 5th generation (5th generation, 5G) mobile communication system (for example, an NR system), an NTN communication system, and a future evolved communication system (for example, a 6th generation (6th generation, 6G) mobile communication system). The communication system may be used in a machine to machine (machine to machine, M2M) network, a machine type communication (machine type communication, MTC) network, or another network.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

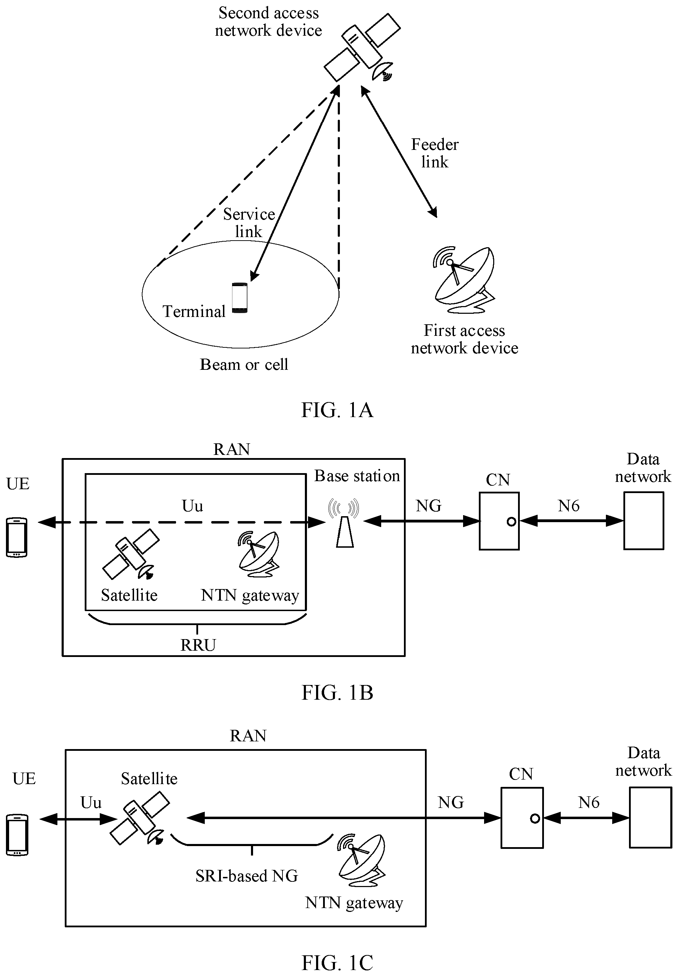

The method provided in embodiments of this application may be applied to the NTN communication system. FIG. 1A shows an architecture of an NTN communication system to which an embodiment of this application is applicable. The communication system may include a terminal, a first access network device, and a second access network device. A communication link between the first access network device and the second access network device is a feedback link (or referred to as a feeder link), and a communication link between the second access network device and the terminal is a service link (service link).

The first access network device may be a gateway station (or referred to as a ground station, an earth station, a gateway earth station, a gateway, or a gateway node) (gateway), or may be a base station.

The second access network device may be a satellite (or referred to as a satellite base station), a high altitude platform station (high altitude platform station, HAPS), or the like. The satellite may include at least one of the following: a geostationary earth orbit (geostationary earth orbit, GEO) satellite (or referred to as a geosynchronous orbit satellite) or a non-geostationary earth orbit (none-geostationary earth orbit, NGEO) satellite. The none-geostationary earth orbit satellite may include at least one of the following: a medium earth orbit (medium earth orbit, MEO) satellite or a low earth orbit (low earth orbit, LEO) satellite. This is not limited herein.

In this embodiment of this application, a communication mode of the second access network device may include two types: a regenerative (regenerative) mode and a transparent transmission (transparent) mode (which may also be referred to as a transparent mode). When the communication mode of the second access network device is the regenerative mode, the second access network device may be used as a base station for wireless communication. For example, the second access network device may include a next generation NodeB (next generation NodeB, gNB), a distributed unit (distributed unit, DU), or the like. When the communication mode of the second access network device is the transparent transmission mode, the second access network device may perform frequency conversion forwarding on a signal.

It should be understood that FIG. 1A shows only one first access network device and one second access network device. In actual use, an architecture of a plurality of first access network devices and/or one second access network device may be used based on a requirement. Each second access network device may provide a service for one or more terminals, each second access network device may correspond to one or more first access network devices, and each first access network device may correspond to one or more second access network devices. This is not specifically limited in this application.

In this application, a terminal (terminal) may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal device (terminal equipment), a wireless communication device, a user agent, or a user apparatus.

The terminal may be a device that provides a wireless communication function, for example, a handheld device or a vehicle-mounted device that has a wireless connection function. Currently, some examples of the terminal are: a mobile phone (mobile phone), a satellite mobile terminal, a cellular phone (cellular phone), a smart phone (smart phone), a tablet computer, a notebook computer, a palmtop computer, a mobile internet device (mobile internet device, MID), a wearable device (for example, a smart watch, a smart band, a pedometer, and smart glasses), a vehicle-mounted device (for example, a car, a bicycle, an electric vehicle, an airplane, a ship, a train, and a high-speed railway), a satellite terminal, a virtual reality (virtual reality, VR) device, an augmented reality (augmented reality, AR) device, a smart point of sale (point of sale, POS) machine, a customer-premises equipment (customer-premises equipment, CPE), a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), and a wireless terminal in smart home (smart home) (for example, a refrigerator, a television, an air conditioner, and a meter), a smart robot, a robotic arm, a cellular phone, a cordless phone, session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a flight device (for example, a smart robot, a hot air balloon, an uncrewed aerial vehicle, an aircraft), a terminal in a 5th generation (5th generation, 5G) network or a terminal in a future evolved public land mobile network (public land mobile network, PLMN), or the like. This is not limited in embodiments of this application. As an example instead of a limitation, in this embodiment of this application, the terminal may alternatively be a mobile terminal (mobile termination, MT) in an integrated access and backhaul (integrated access and backhaul, IAB) node. When facing a parent node of the IAB node, the IAB node may be considered as a terminal. In this case, the IAB node plays a role of an MT.

A device form of the terminal is not limited in embodiments of this application. An apparatus configured to implement a function of the terminal may be a terminal, or may be an apparatus, for example, a chip system, that can support the terminal in implementing the function. The apparatus may be installed in the terminal or used in cooperation with the terminal. In this embodiment of this application, the chip system may include a chip, or may include a chip and another discrete component.

In this application, an access network device is a device that provides a wireless communication function for the terminal, and the terminal may communicate with a core network device through the access network device. As a node in a radio access network, the access network device may also be referred to as a base station, a radio access network (radio access network, RAN) node (or device), or an access point (access point, AP). The communication system may include a plurality of access network devices, and the plurality of access network devices may be nodes of a same type, or may be nodes of different types. In some scenarios, roles of the access network device and the terminal are relative. For example, a network element #A may be a helicopter or an uncrewed aerial vehicle, and may be configured as a mobile base station, and access the RAN through a network element #B. For terminals that access the RAN through the network element #A, the network element #A is a base station. However, for the network element #B, the network element #A is a terminal.

In a possible scenario, the access network device may be a base station (base station), an evolved NodeB (evolved NodeB, eNodeB), a transmission reception point (transmission reception point, TRP), a transmission point (transmission point, TP), a gNB, a next generation base station in a 6G mobile communication system, a base station in a future mobile communication system, a satellite, an access point (access point, AP) in a Wi-Fi system, an IAB node, a mobile switching center, an access network device in an NTN communication system, or the like. In other words, the access network device may be deployed on a high altitude platform or a satellite. The access network device may be a macro base station, a micro base station, an indoor base station, a relay node, a donor node, or a radio controller in a cloud RAN (cloud RAN, CRAN) scenario. Alternatively, the access network device may be a device that functions as a base station in device to device (device to device, D2D) communication, internet of vehicles communication, uncrewed aerial vehicle communication, or machine to machine communication. Optionally, the access network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of access network devices cooperate to assist the terminal in implementing the radio access, and different access network devices respectively implement a part of functions of a base station. For example, the access network device may be a central unit (central unit, CU), DU, a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including the CU node and the DU node. In addition, the CU may be classified as an access network device in an access network RAN, or the CU may be classified as an access network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a form of the access network device is not limited. An apparatus configured to implement a function of the access network device may be an access network device, or may be an apparatus, for example, a chip system, that can support the access network device in implementing the function. The apparatus may be installed in the access network device or used with the access network device.

The access network device and the terminal may be at fixed positions, or may be movable. The access network device and the terminal may be deployed on land, including an indoor device, an outdoor device, a hand-held device, or a vehicle-mounted device; may be deployed on water; or may be deployed on an airplane, a balloon, and an artificial satellite in air. Application scenarios of the access network device and the terminal are not limited in embodiments of this application.

In this application, the core network device is a network element included in a core network part in a mobile communication system. For example, the core network device is a network function (network function, NF) network element and a user plane function (user plane function, UPF) network element included in the core network part. The core network device can connect the terminal to different data networks, and perform services such as charging, mobility management, session management, and user plane forwarding. Currently, some examples of the NF network element are: a unified data management (unified data management, UDM) network element, a unified data repository (unified data repository, UDR) network element, a network exposure function (network exposure function, NEF) network element, an application function (application function, AF) network element, a policy control function (policy control function, PCF) network element, an access and mobility management function (access and mobility management function, AMF) network element, a session management function (session management function, SMF) network element, a network repository function (network repository function, NRF) network element, and the like.

A satellite communication system shown in this application may have a plurality of possible architectures, for example, any one of an architecture 1 to an architecture 5.

Architecture 1: FIG. 1B shows a satellite communication system in a transparent transmission mode to which an embodiment of this application is applicable. As shown in FIG. 1B, a terminal may communicate with a terrestrial base station through a Uu interface, and a satellite and an NTN gateway may be considered as RRUs of the terrestrial base station, and may implement transparent forwarding of a signal. The satellite supports functions such as radio frequency filtering (radio frequency filtering) and frequency conversion and amplification (frequency conversion and amplification). In other words, the satellite may be used as a layer-1 relay (L1 relay) to regenerate a physical-layer signal.

Architecture 2: FIG. 1C shows a satellite communication system in a regenerative mode to which an embodiment of this application is applicable. As shown in FIG. 1C, a satellite has some or all functions of an access network device, and may be referred to as a satellite base station. The satellite may provide a wireless access service, and schedule a radio resource for a terminal device that accesses a network through the satellite. There is no inter-satellite link (inter-satellite link, ISL) between satellites.

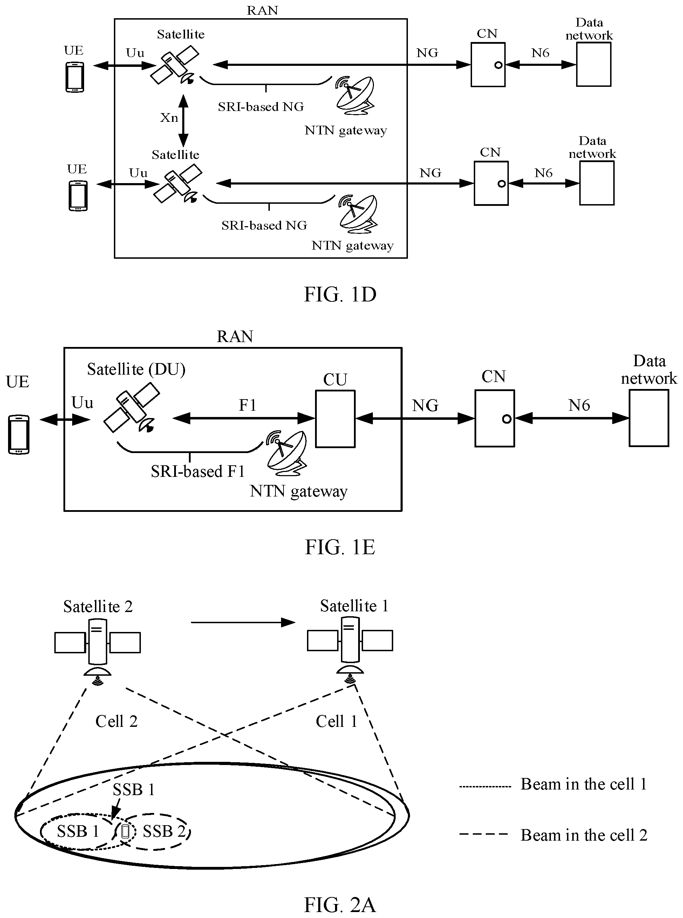

Architecture 3: FIG. 1D shows another satellite communication system in a regenerative mode to which an embodiment of this application is applicable. As shown in FIG. 1D, a satellite has some or all functions of an access network device, and may be referred to as a satellite base station. The satellite may provide a wireless access service, and schedule a radio resource for a terminal device that accesses a network through the satellite. There is an ISL between satellites. For example, the ISL is a link on an Xn interface, and the satellites may communicate with each other through the Xn interface.

Architecture 4: FIG. 1E shows still another satellite communication system in a regenerative mode to which an embodiment of this application is applicable. As shown in FIG. 1E, a satellite is equipped with a DU, and a terrestrial base station includes a CU. An NTN gateway may be considered as an RRU of a terrestrial base station, and may implement transparent forwarding of a signal.

Architecture 5: A satellite is a base station having an IAB function, and a terminal accesses a network through the satellite.

The following first explains and describes related terms in embodiments of this application. It should be noted that, these explanations are intended to make embodiments of this application easier to understand, but should not be construed as a limitation on the protection scope claimed in this application.

### (1) Random access procedure:

The random access procedure is a process that is initiated by a terminal to implement uplink synchronization between the terminal and an access network device after downlink synchronization is implemented between the terminal and the access network device. The random access procedure may be classified into a contention-based (contention-based) random access procedure and a contention-free (contention-free) random access procedure, which are separately described below.

The contention-based random access procedure may also be referred to as a 4-step random access procedure. In the contention-based random access procedure, the terminal may send a random access signal to the access network device, where the random access signal includes a preamble (preamble). The access network device may detect the preamble, and estimate a propagation delay from the terminal to the access network device based on the preamble, to determine a timing advance (timing advance, TA). The access network device sends a random access response (random access response, RAR) to the terminal. The RAR includes the TA, a time-frequency resource position that is for uplink scheduling and that is configured by the access network device for the terminal, and the like. The terminal sends a radio resource control (radio resource control, RRC) request at the time-frequency resource position included in the RAR. The RRC request may also be referred to as a message 3 (message 3, Msg3). After receiving the RRC request, the access network device may send a contention resolution (contention resolution) message to the terminal, to complete random access.

The contention-free random access procedure may also be referred to as a 2-step random access procedure. In the contention-free random access procedure, the terminal may send a preamble based on an indication of the preamble from the access network device. After receiving the preamble, the access network device sends a RAR to the terminal, to complete random access.

### (2) Random access channel less (random access channel less, RACH-less) procedure:

During handover, a source access network device may send, to the terminal, a TA of a target cell corresponding to a target access network device. In this way, after the terminal is within a coverage area of the target cell, the terminal may perform uplink synchronization with the target access network device by using the TA. In other words, the terminal may perform uplink synchronization with the target access network device through the random access channel less procedure, to communicate with the target access network device. In this process, the terminal does not need to perform uplink synchronization with the target access network device through a random access procedure, so that signaling can be reduced, and a handover delay of the terminal can be reduced.

### (3) Resource:

In this application, the resource may include a time domain resource and/or a frequency domain resource. For example, the time domain resource may include a resource in a subframe, a slot, or a symbol, and the frequency domain resource may include a resource in a resource block (resource block, RB) or a resource block group (resource block group, RBG).

### (4) Signal quality:

In this application, the signal quality may be signal strength. A parameter used for reflecting or representing the signal strength may include but is not limited to at least one of the following: reference signal received power (reference signal received power, RSRP), reference signal received quality (reference signal received quality, RSRQ), or a received signal strength indication (received signal strength indication, RSSI).

### (5) Synchronization signal and physical broadcast channel (physical broadcast channel, PBCH) block (synchronization signal and PBCH block, SSB):

Currently, the SSB may include a synchronization signal and a PBCH. The synchronization signal may be used by the terminal to perform downlink synchronization and obtain an identifier (identifier, ID) of a cell. The downlink synchronization may include frequency synchronization and time synchronization. The PBCH may be used by the terminal to obtain information about an accessed cell. For example, the SSB may include a primary synchronization signal (primary synchronization signal, PSS), a secondary synchronization signal (secondary synchronization signal, SSS), and a PBCH. Both the PSS and the SSS are synchronization signals. The PSS may be used for transmitting a cell identifier, and the SSS may be used for transmitting a cell group identifier. The cell identifier and the cell group identifier jointly determine a plurality of physical cell identifiers (physical cell identifiers, PCIs) in a communication system. Once the terminal successfully finds the PSS and the SSS, the terminal knows the PCI corresponding to the SSB. The PBCH may be used for transmitting a main information block (main information block, MIB). The MIB may include a system frame number, a subcarrier spacing for initial access, and the like, and the terminal may access a cell based on the MIB and the like.

(6) In this application, that a first SSB is the same as a second SSB has same meanings as and is interchangeable with at least one of the following: An index of the first SSB is the same as an index of the second SSB, a beam corresponding to the first SSB is the same as a beam corresponding to the second SSB, a direction of the first SSB is the same as a direction of the second SSB, and a direction of the beam corresponding to the first SSB is the same as a direction of the beam corresponding to the second SSB. That a first SSB is different from a second SSB has same meanings as and is interchangeable with at least one of the following: An index of the first SSB is different from an index of the second SSB, a beam corresponding to the first SSB is different from a beam corresponding to the second SSB, a direction of the first SSB is different from a direction of the second SSB, and a direction of the beam corresponding to the first SSB is different from a direction of the beam corresponding to the second SSB. That the terminal is within a coverage area of a second satellite may be replaced with that the terminal is handed over to the second satellite. Sending by a satellite and sending by a cell corresponding to the satellite may be interchanged, and receiving by a satellite and receiving by a cell corresponding to the satellite may be interchanged. Performing uplink synchronization may be replaced with performing synchronization, and downlink synchronization may be replaced with synchronization.

In an NTN, as satellites move, a satellite that can provide a service for a terminal may change. For example, a satellite 1 provides a service for a terminal 1 to a terminal M, where M is a positive integer. With movement of the satellites, the terminal 1 to the terminal M change from being within a coverage area of the satellite 1 to being within a coverage area of a satellite 2, and therefore need to be handed over to the satellite 2, and the satellite 2 provides a service for the terminal 1 to the terminal M. In this way, within a short period of time, a large quantity of terminals may need to be handed over from one satellite to another satellite. How to improve efficiency of inter-satellite handover of the terminal needs further research.

In some possible manners, during inter-satellite handover, the terminal may perform uplink synchronization with a target satellite through a random access channel less procedure, to communicate with the target satellite. For example, a satellite 1 may broadcast time information 1. The time information 1 may indicate one of the following: a moment at which the satellite 1 stops serving an area 1 (where for example, the area 1 may be a coverage area of the current satellite 1), a moment at which a satellite 2 starts to serve the area 1, or a moment at which the terminal resynchronizes with the satellite 2. The satellite 1 may further broadcast indication information 1, and the indication information 1 indicates that the terminal may perform uplink synchronization with the target satellite through the random access channel less procedure. At the moment indicated by the time information 1 or after the moment indicated by the time information 1, the terminal may synchronize with the target satellite through the random access channel less procedure.

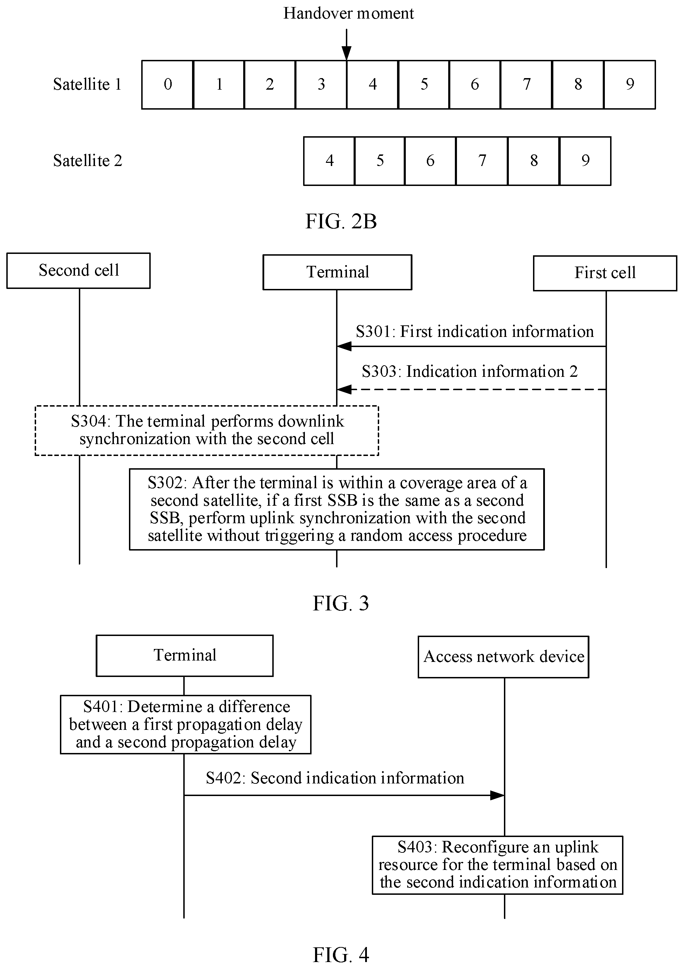

The foregoing method may cause at least one of the following problems:
Problem 1: If optimal beams of the terminal before and after handover are inconsistent, the terminal cannot receive a message from the target satellite, and consequently cannot be successfully handed over to the target satellite. For example, as shown in FIG. 2A, the terminal needs to be handed over from the satellite 1 to the satellite 2. Within the coverage area of the satellite 1, an optimal beam of the terminal is a beam corresponding to an SSB 1. Within the coverage area of the satellite 2, an optimal beam of the terminal is a beam corresponding to an SSB 2. If both the beam corresponding to the SSB 1 and the beam corresponding to the SSB 2 exist within the coverage area of the satellite 2, an access network device does not know that the optimal beam of the terminal is the beam corresponding to the SSB 2, and may continue to send a message to the terminal by using the beam corresponding to the SSB 1, for example, send a physical downlink control channel (physical downlink control channel, PDCCH) used for configuring an uplink resource. Because the beam is directional, the terminal may fail to receive a message from the satellite 2, and consequently cannot be handed over to the satellite 2.
Problem 2: If a serving access network device of the terminal remains unchanged during inter-satellite handover, the terminal may perform seamless transmission, and a data conflict may occur during transmission. For example, the terminal needs to be handed over from the satellite 1 to the satellite 2. The terminal communicates with the satellite 1 by using a TA 1, and communicates with the satellite 2 by using a TA 2. Because a distance between the terminal and the satellite 2 is greater than a distance between the terminal and the satellite 1, the TA 2 is greater than the TA 1. In this way, a 1^{st} time of scheduling in a target cell corresponding to the satellite 2 may be performed at the same time as a last time of scheduling in a source cell corresponding to the satellite 1, causing a data conflict. For example, as shown in FIG. 2B, a subframe 3 sent by the terminal to the source cell conflicts with a subframe 4 sent by the terminal to the target cell in terms of time. Consequently, data in the subframe 3 sent by the terminal to the source cell conflicts with data in the subframe 4 sent by the terminal to the target cell.

In view of this, embodiments of this application provide a communication method. FIG. 3 is a schematic flowchart corresponding to a communication method according to an embodiment of this application. In the method shown in FIG. 3, an example in which a first cell corresponding to a first satellite is a source cell of a terminal, and a second cell corresponding to a second satellite is a target cell of the terminal is used. In other words, the first satellite is a satellite that provides a service for the terminal before the terminal is handed over, and the second satellite is a satellite that provides a service for the terminal after the terminal is handed over. Optionally, cell identifiers (for example, PCIs) of the first cell and the second cell are the same or different. As shown in FIG. 3, the method includes the following steps.

S301: The first cell sends first indication information to the terminal; and correspondingly, the terminal receives the first indication information from the first cell.

The first cell may send the first indication information to the terminal on a plurality of occasions. For example, when the terminal is about to leave a coverage area of the first satellite, the first cell may send the first indication information to the terminal. For example, if the first satellite determines that the terminal leaves the coverage area of the first satellite after duration 1, the first satellite may send the first indication information to the terminal. A basis for the first satellite to determine that the terminal leaves the coverage area of the first satellite after the duration 1 may include one or more of an ephemeris of the first satellite, a moving speed of the terminal, and a moving direction of the terminal. The duration 1 may be preconfigured, for example, specified in a protocol, or may be determined by the first satellite, or may be notified to the first satellite after being determined by another device (for example, a core network device).

The first indication information may indicate that the terminal may perform uplink synchronization with the second satellite without triggering a random access procedure. In other words, the first indication information may indicate that the terminal may not trigger the random access procedure when performing uplink synchronization with the second satellite. Skipping triggering the random access procedure is, for example, performing a random access channel less procedure.

There may be a plurality of manners in which the first indication information indicates that the terminal may perform uplink synchronization with the second satellite without triggering the random access procedure, for example, a manner a1 or a manner a2.

**Manner a1:** The first indication information explicitly indicates that the terminal may perform uplink synchronization with the second satellite without triggering the random access procedure. For example, when a value of the first indication information is a first value (for example, 0 or 1), the first indication information may indicate that the terminal may perform uplink synchronization with the second satellite without triggering the random access procedure.

**Manner** a2: The first indication information implicitly indicates that the terminal may perform uplink synchronization with the second satellite without triggering the random access procedure. For example, the first indication information includes a parameter N_{TA}, a value of N_{TA} may be 0 or N_{TA} used by the terminal in the first cell, and N_{TA} used by the terminal in the first cell may be used for determining a TA used by the terminal in the first cell. After receiving N_{TA}, the terminal may determine to perform uplink synchronization with the second satellite without triggering the random access procedure. Optionally, after receiving N_{TA}, the terminal may calculate or adjust, based on N_{TA}, an initial TA used by the terminal in the second cell. For example, the terminal may determine, based on N_{TA}, a position of the terminal, the ephemeris of the first satellite, and an ephemeris of the second satellite, the initial TA used by the terminal in the second cell. The ephemeris of the first satellite and the ephemeris of the second satellite may be obtained by the terminal from the first satellite.

The first indication information may be carried in a conventional message, or may be carried in a new message. The first indication information may be carried in a message broadcast by the first cell, or may be carried in a unicast message sent by the first cell to the terminal. This is not limited in this application.

S302: After the terminal is within a coverage area of the second satellite, if a first SSB is the same as a second SSB, the terminal may perform uplink synchronization with the second satellite without triggering the random access procedure. In other words, the terminal may not trigger the random access procedure, and perform uplink synchronization with the second satellite; or the terminal performs uplink synchronization with the second satellite, but does not trigger the random access procedure.

The first SSB is used for communication between the terminal and the first satellite, and the second SSB is used for communication between the terminal and the second satellite. In other words, the terminal may communicate with the first satellite by using the first SSB, and the terminal may communicate with the second satellite by using the second SSB.

In some possible manners, after the terminal is within the coverage area of the second satellite, the terminal may determine the second SSB. If the first SSB is the same as the second SSB, the terminal may perform uplink synchronization with the second satellite without triggering the random access procedure.

Optionally, an occasion at which the terminal determines the second SSB may be determined based on indication information 2 from the first cell. In other words, the first cell sends the indication information 2 to the terminal, where the indication information 2 may be used for determining the occasion at which the terminal determines the second SSB. The indication information 2 may be carried in a conventional message, or may be carried in a new message. The indication information 2 and the first indication information may be carried in a same message, or may be carried in different messages. The indication information 2 may be a message broadcast by the first cell, or may be a unicast message sent by the first cell to the terminal.

In some possible manners, the indication information 2 indicates that the terminal needs to re-perform synchronization. In this way, after receiving the indication information 2, the terminal may determine the second SSB.

In some other possible manners, the indication information 2 includes time information 2, the time information 2 may indicate a moment 1, and the moment 1 is related to the occasion at which the terminal determines the second SSB. The moment 1 may be one of the following: a moment (which may be referred to as t-Service) at which the first satellite stops serving an area 2 (where for example, the area 2 may be a current coverage area of the first satellite), a moment (which may be referred to as t-Start) at which the second satellite starts to serve the area 2, or a moment at which the terminal re-performs uplink synchronization with the second satellite. The moment at which the second satellite starts to serve the area 2 may be represented by using a time interval (which may be referred to as t-gap) between the moment at which the second satellite starts to serve the area 2 and the moment at which the first satellite stops serving the area 2. The time interval may be an integer, a negative number, or 0.

For example, the moment 1 is a moment at which the first satellite stops serving the area 2. The terminal may determine the second SSB at the moment 1, within duration 2 before the moment 1, or within duration 3 after the moment 1. The duration 2 and the duration 3 may be preconfigured, for example, specified in a protocol; or may be determined by the terminal; or may be notified to the terminal after being determined by another device (for example, the first satellite or the second satellite).

For another example, the moment 1 is a moment at which the second satellite starts to serve the area 2. The terminal may determine the second SSB at the moment 1, within duration 4 before the moment 1, or within duration 5 after the moment 1. The duration 4 and the duration 5 may be preconfigured, for example, specified in a protocol; or may be determined by the terminal; or may be notified to the terminal after being determined by another device (for example, the first satellite or the second satellite).

For still another example, the moment 1 is a moment at which the terminal resynchronizes with the second satellite, and the terminal may determine the second SSB at the moment 1 or within duration 6 after the moment 1. The duration 6 may be preconfigured, for example, specified in a protocol; or may be determined by the terminal; or may be notified to the terminal after being determined by another device (for example, the first satellite or the second satellite).

The terminal may determine the second SSB in a plurality of manners, for example, a manner b1, a manner b2, or a manner b3.

**Manner b1:** After the terminal is within the coverage area of the second satellite, the terminal determines whether the first SSB from the second cell can be received. If the terminal can receive the first SSB from the second cell, the terminal may determine the first SSB as the second SSB. In other words, the first SSB is the same as the second SSB, and the terminal may communicate with the second satellite by using the first SSB. If the first SSB from the second cell cannot be received, the terminal may determine, as the second SSB, an SSB that is from the second cell and that has best signal quality or any SSB that is from the second cell and whose signal quality is greater than a threshold 1.

**Manner b2:** After the terminal is within the coverage area of the second satellite, the terminal determines whether the first SSB from the second cell can be received. If the terminal can receive the first SSB from the second cell, and signal quality of the first SSB is greater than a first signal quality threshold, the terminal may determine the first SSB as the second SSB. In other words, the first SSB is the same as the second SSB, and the terminal may communicate with the second satellite by using the first SSB. If the terminal can receive the first SSB from the second cell, and the signal quality of the first SSB is less than or equal to the first signal quality threshold, or the terminal cannot receive the first SSB from the second cell, the terminal may determine, as the second SSB, an SSB that is from the second cell and that has best signal quality or any SSB that is from the second cell and whose signal quality is greater than a threshold 1. The first signal quality threshold may be preconfigured, for example, specified in a protocol; or may be determined by the terminal; or may be configured by another device (for example, the first satellite or the second satellite) for the terminal.

Optionally, in the manner b2, "greater than" may be replaced with "greater than or equal to", and "less than or equal to" may be replaced with "less than".

**Manner** b3: After the terminal is within the coverage area of the second satellite, the terminal may determine, as the second SSB, an SSB that is from the second cell and that has best signal quality or any SSB that is from the second cell and whose signal quality is greater than a threshold 1. In other words, the second SSB is the SSB that is from the second cell and that has the best signal quality or whose signal quality is greater than the threshold 1.

In the manner b1 to the manner b3, the threshold 1 may be preconfigured, for example, specified in a protocol; or may be determined by the terminal; or may be configured by another device (for example, the first satellite or the second satellite) for the terminal.

As described above, in S302, the terminal may perform uplink synchronization with the second satellite without triggering the random access procedure. For example, the terminal performs uplink synchronization with the second satellite through the random access channel less procedure. In other words, the terminal may perform the random access channel less procedure, to implement uplink synchronization between the terminal and the second satellite. For specific content of the random access channel less procedure, refer to the foregoing descriptions of the random access channel less procedure in the term explanation part. Only the source access network device is replaced with the first satellite or the first cell, and the target access network device is replaced with the second satellite or the second cell. Details are not described herein again.

In some possible manners, in S302, that the terminal performs uplink synchronization with the second satellite without triggering the random access procedure may include: The terminal sets, to a value of a parameter N_{TA} received by the terminal in the first cell, a value of a parameter N_{TA} corresponding to the second cell or a value of a parameter N_{TA} corresponding to a TA group to which the second cell belongs. The parameter N_{TA} received by the terminal in the first cell may be the parameter N_{TA} included in the first indication information, or may be a parameter N_{TA} sent by the first cell to the terminal by using information other than the first indication information.

According to the method shown in FIG. 3, after the terminal is within the coverage area of the second satellite, the terminal may perform uplink synchronization with the second satellite without triggering the random access procedure, so that efficiency of inter-satellite handover of the terminal can be improved. In addition, in this method, only when the first SSB is the same as the second SSB, the terminal can perform uplink synchronization with the second satellite without triggering the random access procedure. In this way, the terminal can receive a message from the second satellite by using a beam corresponding to the second SSB, and is successfully handed over to the second satellite, so that the foregoing problem 1 can be resolved.

In some possible manners, the method shown in FIG. 3 further includes step A1.

Step A1: After the terminal is within the coverage area of the second satellite, if the first SSB is different from the second SSB, the terminal performs uplink synchronization with the second satellite through the random access procedure. In other words, the terminal triggers or performs the random access procedure, to perform uplink synchronization with the second satellite. For specific content of the random access procedure, refer to the descriptions of the random access procedure in the term explanation part. Only the access network device is replaced with the second satellite or the second cell. Details are not described herein again.

In some possible manners, after the terminal is within the coverage area of the second satellite, the terminal may determine the second SSB. If the first SSB is different from the second SSB, the terminal performs uplink synchronization with the second satellite through the random access procedure. For an occasion at which and a manner in which the terminal determines the second SSB, refer to the descriptions of the occasion at which and the manner in which the terminal determines the second SSB in S302. Details are not described herein again.

In this manner, when the first SSB is different from the second SSB, the terminal may perform uplink synchronization with the second satellite by triggering the random access procedure, so that a case in which the terminal cannot receive the message from the second satellite when performing uplink synchronization with the second satellite without triggering the random access procedure can be avoided, and further, the terminal can receive the message from the second satellite and is successfully handed over to the second satellite.

In some other possible manners, the method shown in FIG. 3 further includes step B1 and step B2.

Step **B1:** The first cell or the second cell sends resource configuration information to the terminal; and correspondingly, the terminal receives the resource configuration information from the first cell or the second cell.

The resource configuration information is used for configuring an uplink resource. The uplink resource may be used by the terminal to send a message to the second satellite after the terminal is within the coverage area of the second satellite. For example, the resource configuration information may include indication information of the uplink resource. For example, the resource information may include frequency domain offset information and time domain information. The frequency domain offset information indicates a frequency offset between the uplink resource and a center frequency, and the time domain information indicates a time domain position (for example, a start frame and/or a start symbol) of the uplink resource. The resource configuration information may be carried in a conventional message, or may be carried in a new message. The resource configuration information and the first indication information may be carried in a same message, or may be carried in different messages.

In some possible manners, when step B1 includes that the first cell sends the resource configuration information to the terminal, when the terminal is about to leave the coverage area of the first satellite, the first cell may send the resource configuration information to the terminal. For specific content describing that the terminal is about to leave the coverage area of the first satellite, refer to the descriptions that the terminal is about to leave the coverage area of the first satellite in S301. Details are not described herein again.

Optionally, to enable the second cell to receive the message from the terminal by using the uplink resource, the second cell may learn that the uplink resource is used by the terminal to send a message to the second cell after the terminal is within the coverage area of the second satellite. In some examples, after configuring the uplink resource for the terminal, the first cell may notify the second cell that the uplink resource is used by the terminal to send a message to the second cell after the terminal is within the coverage area of the second satellite. In some other examples, the uplink resource is a resource configured by the second cell for the terminal for message sending. After configuring the uplink resource, the second cell notifies the first cell of the uplink resource, and then the first cell may perform step B1.

In some other possible manners, when step B1 includes that the second cell sends the resource configuration information to the terminal, after the terminal is within the coverage area of the second satellite, the second cell may send the resource configuration information to the terminal. For example, the second cell may broadcast the resource configuration information. In this way, after the terminal is within the coverage area of the second satellite, the terminal may receive the resource configuration information from the second cell.

Step B2: After the terminal is within the coverage area of the second satellite, if the first SSB is different from the second SSB, the terminal sends a message to the second cell by using the uplink resource configured by using the resource configuration information. For example, after the terminal is within the coverage area of the second satellite, if the first SSB is different from the second SSB, the terminal sends, to the second cell by using the uplink resource, a message including data and/or control information.

Optionally, the terminal may send, to the second cell by using the uplink resource (for example, an initial uplink resource) configured by using the resource configuration information, information indicating the second SSB. In this way, the terminal may notify the second cell of the second SSB, so that the second cell communicates with the terminal by using the second SSB. In some examples, the information indicating the second SSB may explicitly indicate the second SSB. For example, the information indicating the second SSB is an index of the second SSB. In some other examples, the information indicating the second SSB may implicitly indicate the second SSB. For example, the information indicating the second SSB may be information that has a correspondence with the second SSB. The information indicating the second SSB may be carried in a conventional message, or may be carried in a new message. This is not limited in this application.

In this manner, when the first SSB is different from the second SSB, the terminal may send the message to the second cell by using the uplink resource configured by using the resource configuration information, so that a delay of sending the message to the second cell can be reduced.

In some possible manners, S302 may be replaced with step C1.

Step C1: After the terminal is within the coverage area of the second satellite, if the first SSB is the same as the second SSB, and signal quality of the second SSB is greater than a first threshold, the terminal may perform uplink synchronization with the second satellite without triggering the random access procedure. For specific content describing that the terminal performs uplink synchronization with the second satellite without triggering the random access procedure, refer to the descriptions that the terminal may perform uplink synchronization with the second satellite without triggering the random access procedure in S302. For an occasion at which and a manner in which the terminal determines the second SSB, refer to the descriptions of the occasion at which and the manner in which the terminal determines the second SSB in S302. Details are not described herein again. The first threshold may be preconfigured, for example, specified in a protocol; or may be determined by the terminal; or may be configured by another device (for example, the first satellite or the second satellite) for the terminal.

Optionally, "greater than" in step C1 may be replaced with "greater than or equal to".

In this manner, after the terminal is within the coverage area of the second satellite, the terminal may perform uplink synchronization with the second satellite without triggering the random access procedure, so that efficiency of inter-satellite handover of the terminal can be improved. In addition, in this manner, only when the first SSB is the same as the second SSB, and the signal quality of the second SSB is greater than the first threshold, the terminal may perform uplink synchronization with the second satellite without triggering the random access procedure, so that the terminal can receive the message from the second satellite and is successfully handed over to the second satellite.

In some implementations, the method shown in FIG. 3 further includes step D1.

Step D1: After the terminal is within the coverage area of the second satellite, if the first SSB is the same as the second SSB, and signal quality of the second SSB is less than or equal to a first threshold, the terminal may perform uplink synchronization with the second satellite through the random access procedure.

For specific content describing that the terminal performs uplink synchronization with the second satellite through the random access procedure, refer to the descriptions that the terminal performs uplink synchronization with the second satellite through the random access procedure in step A1. For specific content of the first threshold, refer to the descriptions of the first threshold in step C1. Details are not described herein again.

Optionally, "less than or equal to" in step D1 may be replaced with "less than".

In this implementation, when the first SSB is the same as the second SSB, and the signal quality of the second SSB is less than or equal to the first threshold, the terminal may perform uplink synchronization with the second satellite by triggering the random access procedures, so that cases in which the terminal cannot receive the message from the second satellite when performing uplink synchronization with the second satellite without triggering the random access procedure can be avoided or reduced, and further, the terminal can receive the message from the second satellite, so that the terminal can be successfully handed over to the second satellite.

In some other implementations, the method shown in FIG. 3 further includes steps E1 and E2.

**Step E1:** The first cell or the second cell sends resource configuration information to the terminal; and correspondingly, the terminal receives the resource configuration information from the first cell or the second cell.

For specific content of step E1, refer to step B1. Details are not described herein again.

**Step E2:** After the terminal is within the coverage area of the second satellite, if the first SSB is the same as the second SSB, and signal quality of the second SSB is less than or equal to a first threshold, the terminal may send a message to the second cell by using the uplink resource configured by using the resource configuration information. For example, after the terminal is within the coverage area of the second satellite, if the first SSB is the same as the second SSB, and the signal quality of the second SSB is less than or equal to the first threshold, the terminal sends, to the second cell by using the uplink resource, a message including data and/or control information.

Optionally, the terminal may send, to the second cell by using the uplink resource (for example, an initial uplink resource) configured by using the resource configuration information, information indicating the second SSB. In this way, the terminal may notify the second cell of the second SSB, so that the second cell communicates with the terminal by using the second SSB. For specific content of the information indicating the second SSB, refer to the descriptions of the information indicating the second SSB in step B2. Details are not described herein again.

In this manner, when the first SSB is the same as the second SSB, and the signal quality of the second SSB is less than or equal to the first threshold, the terminal may send the message to the second cell by using the uplink resource configured by using the resource configuration information, so that a delay of sending the message to the second cell can be reduced.

In some possible manners, the method shown in FIG. 3 further includes steps S303 and S304.

**S303:** The first cell sends the indication information 2 to the terminal; and correspondingly, the terminal receives the indication information 2 from the first cell.

The indication information 2 may be used for determining an occasion at which the terminal performs downlink synchronization with the second cell. For specific content of the indication information 2, refer to the descriptions of the indication information 2 in S302. Details are not repeated.

**S304:** The terminal performs downlink synchronization with the second cell.

In some possible manners, the indication information 2 indicates that the terminal needs to re-perform synchronization. In this way, after receiving the indication information 2, the terminal may start to be handed over to the second satellite, and perform downlink synchronization with the second satellite.

In some other possible manners, the indication information 2 includes time information 2, the time information 2 may indicate a moment 1, and the moment 1 is related to an occasion at which the terminal performs downlink synchronization with the second cell. The terminal may perform downlink synchronization with the second cell based on the moment 1. For specific content of the moment 1, refer to the descriptions of the moment 1 in S302. Details are not described herein again.

For example, the moment 1 is a moment at which the first satellite stops serving the area 2. The terminal may start to be handed over to the second satellite at the moment 1, within duration 7 before the moment 1, or within duration 8 after the moment 1, and perform downlink synchronization with the second satellite. The duration 7 and the duration 8 may be preconfigured, for example, specified in a protocol; or may be determined by the terminal; or may be notified to the terminal after being determined by another device (for example, the first satellite or the second satellite).

For another example, the moment 1 is a moment at which the second satellite starts to serve the area 2. The terminal may start to be handed over to the second satellite at the moment 1, within duration 9 before the moment 1, or within duration 10 after the moment 1, and perform downlink synchronization with the second satellite. The duration 9 and the duration 10 may be preconfigured, for example, specified in a protocol; or may be determined by the terminal; or may be notified to the terminal after being determined by another device (for example, the first satellite or the second satellite).

For still another example, the moment 1 is a moment at which the terminal resynchronizes with the second satellite, and the terminal may start to be handed over to the second satellite at the moment 1 or duration 11 after the moment 1, and perform downlink synchronization with the second satellite. The duration 11 may be preconfigured, for example, specified in a protocol; or may be determined by the terminal; or may be notified to the terminal after being determined by another device (for example, the first satellite or the second satellite).

A specific process of downlink synchronization is not limited in this application, and an execution sequence of S304 and the terminal determining the second SSB is not limited either.

In some possible manners, the method shown in FIG. 3 further includes step G1.

**Step G1:** The second cell sends a PDCCH by using the beam corresponding to the second SSB; and correspondingly, the terminal monitors the PDCCH from the second cell by using the beam corresponding to the second SSB. The PDCCH may be used for scheduling an uplink transmission resource for the terminal. In this way, the terminal may send a message to the second cell based on the uplink transmission resource.

Optionally, step G1 may be performed after the terminal performs uplink synchronization with the second cell. For example, step G1 may be performed after step S302, step A1, step C1, or step D1.

Embodiments of this application provide another communication method. FIG. 4 is a schematic flowchart corresponding to a communication method according to an embodiment of this application. In the method shown in FIG. 4, an example in which a first cell corresponding to a first satellite is a source cell of a terminal, and a second cell corresponding to a second satellite is a target cell of the terminal is used. In other words, the first satellite is a satellite that provides a service for the terminal before the terminal is handed over, and the second satellite is a satellite that provides a service for the terminal after the terminal is handed over. Optionally, cell identifiers (for example, PCIs) of the first cell and the second cell are the same or different. As shown in FIG. 4, the method includes the following steps.

**S401:** The terminal determines a difference between a first propagation delay and a second propagation delay.

The first propagation delay and the second propagation delay may be implemented in a plurality of possible manners, for example, a manner c1 or a manner c2.

**Manner c1:** The first propagation delay is a propagation delay of a service link between the terminal and the first cell, and the second propagation delay is a propagation delay of a service link between the terminal and the second cell. For example, if the propagation delay of the service link between the terminal and the first cell is T1, and the propagation delay of the service link between the terminal and the second cell is T2, the first propagation delay is T1, the second propagation delay is T2, and the difference between the first propagation delay and the second propagation delay may be T2-T1.

**Manner c2:** The first propagation delay is a sum of a propagation delay of a service link between the terminal and the first cell and a propagation delay of a link between the first satellite and a first reference point; and the second propagation delay is a sum of a propagation delay of a service link between the terminal and the second cell corresponding to the second satellite and a propagation delay of a link between the second satellite and a second reference point. The first reference point is a point between the first satellite and a ground station (or a base station). The second reference point is a point between the second satellite and a ground station (or a base station).

For example, the first reference point and the second reference point are ground stations or base stations. The first propagation delay may be a sum of the propagation delay of the service link between the terminal and the first cell and a propagation delay of a feedback link between the first satellite and the ground station. The second propagation delay may be a sum of the propagation delay of the service link between the terminal and the second cell and a propagation delay of a feedback link between the second satellite and the ground station. For example, if the propagation delay of the service link between the terminal and the first cell is T1, the propagation delay of the feedback link between the first satellite and the ground station is T3, the propagation delay of the service link between the terminal and the second cell is T2, and the propagation delay of the feedback link between the second satellite and the ground station is T4, the first propagation delay is T1+T3, and the second propagation delay is T2+T4, the difference between the first propagation delay and the second propagation delay may be T2+T4-T1-T3.

There may be a plurality of moments corresponding to the difference between the first propagation delay and the second propagation delay.

In some possible manners, the terminal may determine a difference between the first propagation delay and the second propagation delay at a current moment. In other words, the terminal may determine the difference between the first propagation delay and the second propagation delay in real time. In some examples, the terminal may periodically determine the difference between the first propagation delay and the second propagation delay. A determining period may be preconfigured, for example, specified in a protocol; or may be determined by the terminal; or may be notified to the terminal after being determined by another device (for example, the first satellite or the second satellite). In some other examples, the terminal may determine the difference between the first propagation delay and the second propagation delay based on event triggering. For example, after receiving an indication 1 from the first cell or the second cell, the terminal determines the difference between the first propagation delay and the second propagation delay at the current moment, where the indication 1 indicates the terminal to determine the difference between the first propagation delay and the second propagation delay.

In some other possible manners, the terminal may predict a difference between the first propagation delay and the second propagation delay at at least one of the following moments: a moment at which the first satellite stops providing a service for the terminal, a moment at which the second satellite starts to provide a service for the terminal, and a moment at which the terminal accesses the second satellite. In other words, the difference is the difference between the first propagation delay and the second propagation delay at at least one of the following moments: the moment at which the first satellite stops providing a service for the terminal, the moment at which the second satellite starts to provide a service for the terminal, and the moment at which the terminal accesses the second satellite. In this manner, a computing amount of the terminal can be reduced, and power consumption of the terminal can be reduced.

Optionally, the terminal may determine the first propagation delay and the second propagation delay based on an NTN parameter and a position of the terminal. There are a plurality of determining manners, for example, a manner d1 or a manner d2.

**Manner d1:** An implementation of the first propagation delay and the second propagation delay is the manner c1. The NTN parameter may include an ephemeris of the first satellite and an ephemeris of the second satellite. The terminal may determine the first propagation delay based on the ephemeris of the first satellite and the position of the terminal, and determine the second propagation delay based on the ephemeris of the second satellite and the position of the terminal. The position of the terminal may be a real-time position of the terminal, or may be a predicted position of the terminal at at least one of the following moments: the moment at which the first satellite stops providing a service for the terminal, the moment at which the second satellite starts to provide a service for the terminal, and the moment at which the terminal accesses the second satellite.

For example, if the terminal determines, based on the ephemeris of the first satellite and the position of the terminal, that a distance between the first satellite and the terminal is d1, the first propagation delay T1 is d1/c, where c is the speed of light. If the terminal determines, based on the ephemeris of the second satellite and the position of the terminal, that a distance between the second satellite and the terminal is d2, the second propagation delay T2 is d2/c, where c is the speed of light.

The following describes a manner in which the terminal obtains the NTN parameter. The NTN parameter may be obtained by the terminal from the first cell and/or the second cell. For example, the terminal obtains, from the first cell or the second cell, the NTN parameter including the ephemeris of the first satellite and the ephemeris of the second satellite. For another example, the terminal obtains, from the first cell, an NTN parameter including the ephemeris of the first satellite, and obtains, from the second cell, an NTN parameter including the ephemeris of the second satellite.

Optionally, the NTN parameter may be carried in broadcast messages/a broadcast message sent by the first cell and/or the second cell, or may be carried in unicast messages/a unicast message sent by the first cell and/or the second cell to the terminal.

**Manner d2:** An implementation of the first propagation delay and the second propagation delay is the manner c2. The terminal may determine the first propagation delay and the second propagation delay based on the NTN parameter, the position of the terminal, a position of the first reference point, and a position of the second reference point. The NTN parameter may include an ephemeris of the first satellite and an ephemeris of the second satellite.

Optionally, the terminal may determine the first propagation delay based on the ephemeris of the first satellite, the position of the terminal, and the position of the first reference point, and determine the second propagation delay based on the ephemeris of the second satellite, the position of the terminal, and the position of the second reference point. For specific content of the position of the terminal, refer to the descriptions of the position of the terminal in the manner d1. Details are not described herein again. For example, if the terminal determines, based on the ephemeris of the first satellite and the position of the terminal, that a distance between the first satellite and the terminal is d1, and determines, based on the ephemeris of the first satellite and the position of the first reference point, that a distance between the first satellite and the first reference point is d3, the first propagation delay is (d1+d3)/c, where c is the speed of light. If the terminal determines, based on the ephemeris of the second satellite and the position of the terminal, that a distance between the second satellite and the terminal is d2, and determines, based on the ephemeris of the second satellite and the position of the second reference point, that a distance between the second satellite and the second reference point is d4, the second propagation delay is (d2+d4)/c, where c is the speed of light.

For specific content describing that the terminal obtains the NTN parameter, refer to the descriptions of the manner in which the terminal obtains the NTN parameter in the manner d1. Details are not described herein again. For a manner in which the terminal obtains the position of the first reference point and the position of the second reference point, refer to the descriptions of the manner in which the terminal obtains the NTN parameter in the manner d1. Only the NTN parameter is replaced with the position of the first reference point and the position of the second reference point. Details are not described herein again.

**S402:** When the difference between the first propagation delay and the second propagation delay is greater than a second threshold, the terminal sends second indication information; and correspondingly, an access network device receives the second indication information.

The access network device may be the first satellite, or may be a base station located on the ground. The second threshold may be preconfigured, for example, specified in a protocol; or may be determined by the terminal; or may be notified to the terminal after being determined by another device (for example, the access network device).

The second indication information may indicate to reconfigure an uplink resource for the terminal. There may be a plurality of manners in which the second indication information indicates to reconfigure the uplink resource for the terminal, for example, a manner e1 or a manner e2.

**Manner e1:** The second indication information explicitly indicates to reconfigure the uplink resource for the terminal. For example, the second indication information is a request used for requesting to reconfigure the uplink resource for the terminal. In this way, after receiving the second indication information, the access network device may determine to reconfigure the uplink resource for the terminal.

**Manner e2:** The second indication information may implicitly indicate to reconfigure the uplink resource for the terminal. For example, the second indication information includes the difference between the first propagation delay and the second propagation delay. In this way, after receiving the second indication information, the access network device may determine to reconfigure the uplink resource for the terminal. In addition, because the second indication information includes the difference between the first propagation delay and the second propagation delay, the access network device may further reconfigure the uplink resource for the terminal based on the difference, to effectively avoid a data conflict.

Optionally, in S402, "greater than" may be replaced with "greater than or equal to".

In some possible manners, S402 may be replaced with the following: When an absolute value of the difference between the first propagation delay and the second propagation delay is greater than the second threshold, the terminal sends the second indication information; and correspondingly, the access network device receives the second indication information.

**S403:** The access network device reconfigures the uplink resource for the terminal based on the second indication information.

In some possible manners, the second indication information explicitly indicates to reconfigure the uplink resource for the terminal, and the access network device may reconfigure the uplink resource for the terminal, to avoid or reduce data conflicts generated during inter-satellite handover of the terminal.

In some other possible manners, the second indication information includes the difference between the first propagation delay and the second propagation delay. The access network device may reconfigure the uplink resource for the terminal based on the difference. Optionally, the access network device may release a conflicting uplink resource. For example, as shown in FIG. 2B, the subframe 3 sent by the terminal to the source cell conflicts with the subframe 4 sent by the terminal to the target cell in terms of time, and the access network device may release a resource of the subframe 4. In this manner, a data conflict generated during inter-satellite handover of the terminal can be avoided.

Optionally, the method shown in FIG. 4 further includes steps H1.

**Step H1:** The first cell sends first indication information to the terminal; and correspondingly, the terminal receives the first indication information from the first cell. The first indication information may indicate that the terminal may perform uplink synchronization with the second satellite without triggering a random access procedure.

For specific content of step H1, refer to S301. Details are not described herein again.

According to the method shown in FIG. 4, when the difference between the first propagation delay and the second propagation delay is greater than the second threshold, the terminal may send the second indication information, where the second indication information may indicate to reconfigure the uplink resource for the terminal. The first propagation delay is related to the terminal and the first satellite that provides a service for the terminal before the terminal is handed over, and the second propagation delay is related to the terminal and the second satellite that provides a service for the terminal after the terminal is handed over. In this way, in an inter-satellite handover scenario, the access network device may reconfigure the uplink resource for the terminal, to avoid or reduce data conflicts generated during inter-satellite handover of the terminal, so as to resolve the foregoing problem 2.

Based on a same technical concept as the foregoing method embodiments, an embodiment of this application provides a corresponding communication apparatus, which may be configured to perform functions of related steps in the foregoing method embodiments. The functions may be implemented by hardware, may be implemented by software, or may be implemented by hardware by executing corresponding software. The hardware or the software includes one or more modules corresponding to the functions. The communication apparatus may be a terminal, or may be a module (for example, a circuit or a chip) in the terminal, or may be a logical node, a logical module, or software that can implement all or some functions of the terminal. Alternatively, the communication apparatus may be an access network device or a module (for example, a circuit or a chip) in the access network device, or may be a logical node, a logical module, or software that can implement all or some functions of the access network device.

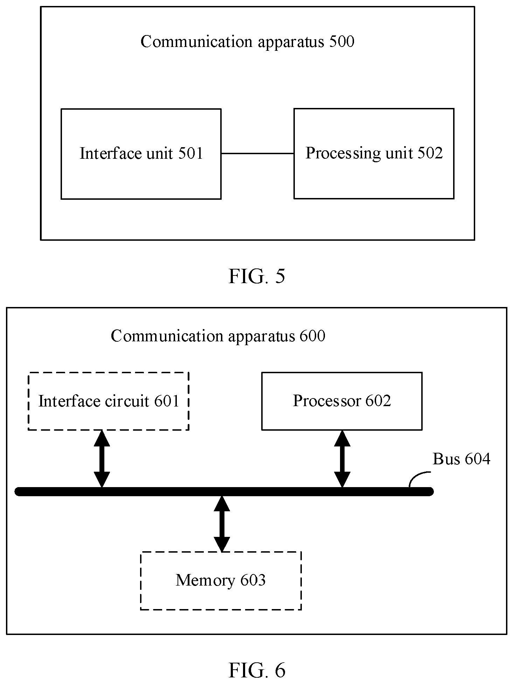

In a possible implementation, a structure of the communication apparatus provided in this embodiment of this application is shown in FIG. 5, and the communication apparatus includes a processing unit 502. Optionally, the communication apparatus further includes an interface unit 501. The following describes functions of various units in the communication apparatus 500.

The interface unit 501 is configured to input and/or output information. Inputting information may be replaced with receiving information, and outputting information may be replaced with sending information. When outputting the information, the interface unit 501 may output the information to an apparatus other than the communication apparatus 500, or may output the information to another unit in the communication apparatus 500. In some manners, the interface unit 501 may be implemented by using at least one of a physical interface, a communication module, a communication interface, and an input/output interface. In some other manners, the interface unit 501 may be implemented by using an interface circuit, for example, a mobile communication module. The mobile communication module may include one or more of at least one antenna, at least one filter, a switch, a power amplifier, a low noise amplifier (low noise amplifier, LNA), and the like.

The processing unit 502 may be configured to support the communication apparatus 500 in performing processing actions in the foregoing method embodiments. The processing unit 502 may be implemented by using one or more processors. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

In an implementation, the communication apparatus 500 is used in the terminal in the embodiment of this application shown in FIG. 3. The following describes a specific function of the processing unit 502 in this implementation.

The processing unit 502 is configured to: receive, through the interface unit 501, first indication information from a first cell corresponding to a first satellite, where the first indication information indicates a terminal to perform uplink synchronization with a second satellite without triggering a random access procedure; and after the terminal is within a coverage area of the second satellite, if a first SSB is the same as a second SSB, perform uplink synchronization with the second satellite without triggering the random access procedure, where the first SSB is used for communication between the terminal and the first satellite, and the second SSB is used for communication between the terminal and the second satellite.

In some possible manners, the processing unit 502 is further configured to: after the terminal is within the coverage area of the second satellite, if the first SSB is the same as the second SSB, perform uplink synchronization with the second satellite without triggering the random access procedure.

In some other possible manners, the processing unit 502 is further configured to: after the terminal is within the coverage area of the second satellite, if the first SSB is the same as the second SSB, and signal quality of the second SSB is less than or equal to a first threshold, perform uplink synchronization with the second satellite through the random access procedure.

Optionally, the processing unit 502 is further configured to: receive, through the interface unit 501, resource configuration information from the first cell or a second cell corresponding to the second satellite, where the resource configuration information is used for configuring an uplink resource; and after the terminal is within the coverage area of the second satellite, if the first SSB is the same as the second SSB, and the signal quality of the second SSB is less than or equal to the first threshold, send a message to the second cell through the interface unit 501 by using the uplink resource.

In some implementations, the processing unit 502 is further configured to: after the terminal is within the coverage area of the second satellite, if the first SSB is different from the second SSB, perform uplink synchronization with the second satellite through the random access procedure.

In some other implementations, the processing unit 502 is further configured to: receive, through the interface unit 501, resource configuration information from the first cell or a second cell corresponding to the second satellite, where the resource configuration information is used for configuring an uplink resource; and after the terminal is within the coverage area of the second satellite, if the first SSB is different from the second SSB, send a message to the second cell through the interface unit 501 by using the uplink resource.

Optionally, the processing unit 502 is further configured to: send, to the second cell through the interface unit 501 by using the uplink resource, information indicating the second SSB.

In another implementation, the communication apparatus 500 is used in the terminal in the embodiment of this application shown in FIG. 4. The following describes a specific function of the processing unit 502 in this implementation.

The processing unit 502 is configured to: determine a difference between a first propagation delay and a second propagation delay, where the first propagation delay is a propagation delay of a service link between the terminal and a first cell corresponding to a first satellite, the second propagation delay is a propagation delay of a service link between the terminal and a second cell corresponding to a second satellite, the first satellite is a satellite that provides a service for the terminal before the terminal is handed over, and the second satellite is a satellite that provides a service for the terminal after the terminal is handed over; and when the difference is greater than a second threshold, send second indication information through the interface unit 501, where the second indication information indicates to reconfigure an uplink resource for the terminal.

In some possible manners, the processing unit 502 is specifically configured to: predict a difference between the first propagation delay and the second propagation delay at at least one of the following moments: a moment at which the first satellite stops providing a service for the terminal, a moment at which the second satellite starts to provide a service for the terminal, and a moment at which the terminal accesses the second satellite.

In still another implementation, the communication apparatus 500 is used in the access network device in the embodiment of this application shown in FIG. 4. The following describes a specific function of the processing unit 502 in this implementation.

The processing unit 502 is configured to: receive, through the interface unit 501, second indication information sent by a terminal when a difference between a first propagation delay and a second propagation delay is greater than a second threshold, where the second indication information indicates to reconfigure an uplink resource for the terminal, the first propagation delay is a propagation delay of a service link between the terminal and a first cell corresponding to a first satellite, the second propagation delay is a propagation delay of a service link between the terminal and a second cell corresponding to a second satellite, the first satellite is a satellite that provides a service for the terminal before the terminal is handed over, and the second satellite is a satellite that provides a service for the terminal after the terminal is handed over; and reconfigures the uplink resource for the terminal based on the second indication information.

For more detailed descriptions of the processing unit 502 and the interface unit 501, directly refer to the related descriptions in the method embodiments shown in FIG. 3 to FIG. 4. Details are not described herein.

It should be noted that, in the foregoing embodiment of this application, division into the modules is an example, is merely logical function division, and may be other division during actual implementation. In addition, function units in embodiments of this application may be integrated into one processing unit, may exist alone physically, or two or more units may be integrated into one unit. The integrated unit may be implemented in a form of hardware, or may be implemented in a form of a software functional unit.

When the foregoing integrated unit is implemented in a form of a software functional unit and sold or used as an independent product, the integrated unit may be stored in a computer-readable storage medium. Based on such an understanding, the technical solutions of this application essentially, or the part contributing to the conventional technologies, or all or a part of the technical solutions may be implemented in the form of a software product. A computer software product is stored in a storage medium and includes several instructions for instructing a computer device (which may be a personal computer, a server, or a network device) or a processor (processor) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In a possible implementation, for a communication apparatus provided in an embodiment of this application, refer to FIG. 6. The communication apparatus 600 includes a processor 602. Optionally, the communication apparatus 600 further includes an interface circuit 601 and a memory 603. The interface circuit 601, the processor 602, and the memory 603 are coupled to each other.

Optionally, the interface circuit 601, the processor 602, and the memory 603 are coupled to each other through a bus 604. The bus 604 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by only one bold line in FIG. 6. However, this does not indicate that there is only one bus or only one type of bus.

The interface circuit 601 is configured to input and/or output information. Inputting information may be replaced with receiving information, and outputting information may be replaced with sending information. When outputting the information, the interface circuit 601 may output the information to an apparatus other than the communication apparatus 600, or may output the information to another unit in the communication apparatus 600. For example, the interface circuit 601 may be implemented by using at least one of a physical interface, a communication module, a communication interface, an input/output interface, and a mobile communication module. The mobile communication module may include one or more of at least one antenna, at least one filter, a switch, a power amplifier, an LNA, and the like.

The processor 602 may be configured to support the communication apparatus 600 in performing processing actions in the foregoing method embodiments. When the communication apparatus 600 is configured to implement the foregoing method embodiments, the processor 602 may be further configured to implement a function of the foregoing processing unit 502. The processor 602 may be a CPU, or may be another general-purpose processor, a DSP, an ASIC, an FPGA or another programmable logic device, a transistor logic device, a hardware component, or any combination thereof. The general-purpose processor may be a microprocessor or any regular processor or the like.

In an implementation, the communication apparatus 600 is used in the terminal in the embodiment of this application shown in FIG. 3. The following describes a specific function of the processor 602 in this implementation.

The processor 602 is configured to: receive, through the interface circuit 601, first indication information from a first cell corresponding to a first satellite, where the first indication information indicates a terminal to perform uplink synchronization with a second satellite without triggering a random access procedure; and after the terminal is within a coverage area of the second satellite, if a first SSB is the same as a second SSB, perform uplink synchronization with the second satellite without triggering the random access procedure, where the first SSB is used for communication between the terminal and the first satellite, and the second SSB is used for communication between the terminal and the second satellite.

In another implementation, the communication apparatus 600 is used in the terminal in the embodiment of this application shown in FIG. 4. The following describes a specific function of the processor 602 in this implementation.

The processor 602 is configured to: determine a difference between a first propagation delay and a second propagation delay, where the first propagation delay is a propagation delay of a service link between the terminal and a first cell corresponding to a first satellite, the second propagation delay is a propagation delay of a service link between the terminal and a second cell corresponding to a second satellite, the first satellite is a satellite that provides a service for the terminal before the terminal is handed over, and the second satellite is a satellite that provides a service for the terminal after the terminal is handed over; and when the difference is greater than a second threshold, send second indication information through the interface circuit 601, where the second indication information indicates to reconfigure an uplink resource for the terminal.

In still another implementation, the communication apparatus 600 is used in the access network device in the embodiment of this application shown in FIG. 4. The following describes a specific function of the processor 602 in this implementation.

The processor 602 is configured to: receive, through the interface circuit 601, second indication information sent by a terminal when a difference between a first propagation delay and a second propagation delay is greater than a second threshold, where the second indication information indicates to reconfigure an uplink resource for the terminal, the first propagation delay is a propagation delay of a service link between the terminal and a first cell corresponding to a first satellite, the second propagation delay is a propagation delay of a service link between the terminal and a second cell corresponding to a second satellite, the first satellite is a satellite that provides a service for the terminal before the terminal is handed over, and the second satellite is a satellite that provides a service for the terminal after the terminal is handed over; and reconfigures the uplink resource for the terminal based on the second indication information.

For the specific function of the processor 602, refer to the descriptions in the communication method provided in the foregoing embodiments of this application and the instances, and the descriptions of the specific functions of the communication apparatus 500 in the embodiment of this application shown in FIG. 5. Details are not described herein again.

The memory 603 is configured to store program instructions, data, and/or the like. Specifically, the program instructions may include program code. The program code includes computer operation instructions. The memory 603 may include a RAM, or may further include a non-volatile memory (non-volatile memory), for example, at least one magnetic disk memory. The processor 602 executes the program instructions stored in the memory 603, and uses the data stored in the memory 603, to implement the foregoing function, so as to implement the communication method provided in the foregoing embodiments of this application. The memory 603 may be integrated with the processor 602, or may be a memory outside the communication apparatus.

It may be understood that the memory 603 in FIG. 6 in this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Based on the foregoing embodiments, an embodiment of this application further provides a computer program product including computer-executable instructions. When the computer program product is run, the method provided in the foregoing embodiments is caused to be performed.

Based on the foregoing embodiments, an embodiment of this application further provides a computer-readable storage medium. The computer-readable storage medium stores a computer program. When the computer program is executed by a computer, the computer is caused to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, another optical disc storage, a disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to the devices in the foregoing embodiments. In a possible design, the chip system further includes a memory, and the memory is configured to store a program and data that are necessary for the computer apparatus. The chip system may include a chip, or may include a chip and another discrete component.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In text descriptions of this application, a character "/" usually indicates an "or" relationship between associated objects. In formulas of this application, the character "/" may indicate a division sign.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A communication method, applied to a terminal, and comprising:
receiving first indication information from a first cell corresponding to a first satellite, wherein the first indication information indicates the terminal to perform uplink synchronization with a second satellite without triggering a random access procedure; and
after the terminal is within a coverage area of the second satellite, if a first synchronization signal and physical broadcast channel PBCH block SSB is the same as a second SSB, performing uplink synchronization with the second satellite without triggering the random access procedure, wherein the first SSB is used for communication between the terminal and the first satellite, and the second SSB is used for communication between the terminal and the second satellite.

2. The method according to claim 1, wherein performing uplink synchronization with the second satellite without triggering the random access procedure comprises:
if signal quality of the second SSB is greater than a first threshold, performing uplink synchronization with the second satellite without triggering the random access procedure.

3. The method according to claim 2, further comprising:
after the terminal is within the coverage area of the second satellite, if the first SSB is the same as the second SSB, and the signal quality of the second SSB is less than or equal to the first threshold, performing uplink synchronization with the second satellite through the random access procedure.

4. The method according to claim 1 or 2, further comprising:
receiving resource configuration information from the first cell or a second cell corresponding to the second satellite, wherein the resource configuration information is used for configuring an uplink resource; and
after the terminal is within the coverage area of the second satellite, if the first SSB is the same as the second SSB, and the signal quality of the second SSB is less than or equal to the first threshold, sending a message to the second cell by using the uplink resource.

5. The method according to claim 1 or 2, further comprising:
after the terminal is within the coverage area of the second satellite, if the first SSB is different from the second SSB, performing uplink synchronization with the second satellite through the random access procedure.

6. The method according to claim 1 or 2, further comprising:
receiving resource configuration information from the first cell or a second cell corresponding to the second satellite, wherein the resource configuration information is used for configuring an uplink resource; and
after the terminal is within the coverage area of the second satellite, if the first SSB is different from the second SSB, sending a message to the second cell by using the uplink resource.

7. The method according to claim 4 or 6, further comprising:
sending, to the second cell by using the uplink resource, information indicating the second SSB.

8. The method according to any one of claims 1 to 7, wherein a cell identifier of the second cell corresponding to the second satellite is the same as or different from a cell identifier of the first cell.

9. A communication method, applied to a terminal, and comprising:
determining a difference between a first propagation delay and a second propagation delay, wherein the first propagation delay is a propagation delay of a service link between the terminal and a first cell corresponding to a first satellite, the second propagation delay is a propagation delay of a service link between the terminal and a second cell corresponding to a second satellite, the first satellite is a satellite that provides a service for the terminal before the terminal is handed over, and the second satellite is a satellite that provides a service for the terminal after the terminal is handed over; and
when the difference is greater than a second threshold, sending second indication information, wherein the second indication information indicates to reconfigure an uplink resource for the terminal.

10. The method according to claim 9, wherein the second indication information comprises the difference.

11. The method according to claim 9 or 10, wherein determining the difference between the first propagation delay and the second propagation delay comprises:
predicting a difference between the first propagation delay and the second propagation delay at at least one of the following moments:
a moment at which the first satellite stops providing a service for the terminal, a moment at which the second satellite starts to provide a service for the terminal, and a moment at which the terminal accesses the second satellite.

12. A communication method, applied to an access network device, and comprising:
receiving second indication information sent by a terminal when a difference between a first propagation delay and a second propagation delay is greater than a second threshold, wherein the second indication information indicates to reconfigure an uplink resource for the terminal, the first propagation delay is a propagation delay of a service link between the terminal and a first cell corresponding to a first satellite, the second propagation delay is a propagation delay of a service link between the terminal and a second cell corresponding to a second satellite, the first satellite is a satellite that provides a service for the terminal before the terminal is handed over, and the second satellite is a satellite that provides a service for the terminal after the terminal is handed over; and
reconfiguring the uplink resource for the terminal based on the second indication information.

13. The method according to claim 12, wherein the second indication information comprises the difference.

14. The method according to claim 12 or 13, wherein the difference is a difference between the first propagation delay and the second propagation delay at at least one of the following moments:
a moment at which the first satellite stops providing a service for the terminal, a moment at which the second satellite starts to provide a service for the terminal, and a moment at which the terminal accesses the second satellite.

15. A communication apparatus,
comprising:
an interface unit, configured to receive and send information; and
a processing unit, configured to perform the method according to any one of claims 1 to 14 through the interface unit.

16. A communication apparatus, comprising a processor, wherein the processor is configured to perform the method according to any one of claims 1 to 14.

17. A computer-readable storage medium, wherein the computer-readable storage medium stores a computer program or instructions, and when the computer program or the instructions are executed by a communication apparatus, the method according to any one of claims 1 to 14 is implemented.

18. A computer program product, wherein the computer program product comprises computer program code, and when the computer program code is run, the method according to any one of claims 1 to 14 is implemented.
